# EUROPÄISCHE PATENTSCHRIFT

(11) **EP 2 880 823 B1**
(45) Veröffentlichungstag und Bekanntmachung des Hinweises auf die Patenterteilung: **31.10.2018**
(21) Anmeldenummer: 13762781.6
(22) Anmeldetag: 10.09.2013
(51) Int. Cl.: H04L 12/46, H04L 29/08, H04L 12/911, H04L 12/813

(54) **KOMMUNIKATIONSNETZWERK UND VERFAHREN ZUM BETREIBEN EINES KOMMUNIKATIONSNETZWERKES**
COMMUNICATION NETWORK AND METHOD FOR OPERATING A COMMUNICATIONS NETWORK
RÉSEAU DE COMMUNICATION ET PROCÉDÉ D'UTILISATION D'UN RÉSEAU DE COMMUNICATION

(30) Priorität: 22.10.2012 DE 102012219176
(43) Veröffentlichungstag der Anmeldung: 10.06.2015
(73) Patentinhaber: Siemens Aktiengesellschaft, 80333 München (DE)
(72) Erfinder: ZIRKLER, Andreas, 81735 München (DE); ARMBRUSTER, Michael, 81825 München (DE); FIEGE, Ludger, 85567 Grafing (DE); RIEDL, Johannes, 84030 Ergolding (DE); SCHMID, Thomas, 70771 Leinfelden-Echterdingen (DE)
(86) Internationale Anmeldenummer: PCT/EP2013/068679
(87) Internationale Veröffentlichungsnummer: WO 2014/063858

(56) Entgegenhaltungen:
- EP-A1- 1 705 839
- CISCO SYSTEMS ET AL: "Understanding Multiple Spanning Tree Protocol (802.1s)", INTERNET CITATION, 14. Mai 2005 (2005-05-14), XP002426379, Gefunden im Internet: URL:http://web.archive.org/web/20050514065 955/www.cisco.com/warp/public/473/147.pdf [gefunden am 2007-03-23]

## Beschreibung

Die vorliegende Erfindung betrifft ein Kommunikationsnetzwerk und ein Verfahren zum Betreiben eines Kommunikationsnetzwerkes. Das Kommunikationsnetzwerk kann insbesondere ein Ethernet-Netzwerk sein.

Kommunikationsnetzwerke finden immer breitere Anwendung zum Messen, Steuern und Regeln komplexer technischer Systeme. Beispielsweise werden zunehmend Netzwerke in Kraftfahrzeugen eingesetzt, um Fahrzeugsteuerungssysteme auszubilden. In entsprechenden komplexen und sicherheitsrelevanten technischen Systemen werden hohe Anforderungen an die Verfügbarkeit der als Netzwerkeinrichtungen vorgesehenen Steuerungselemente gestellt. Beim Ausfall von einzelnen Komponenten, wie beispielsweise Sensoren oder Steuereinrichtungen, darf dies nicht zum Ausfall des Gesamtsystems führen. Besonders sicherheitsrelevant sind Drive-by-Wire-Systeme, z.B. Steer-by-Wire-Systeme, bei denen elektromotorisch über eine Netzwerkkopplung von Sensor-, Steuer- und Aktoreinrichtungen die Lenkradstellung in Radpositionen umgesetzt wird.

In der Vergangenheit wurden redundante Ausführungen besonders kritischer Komponenten eingesetzt, so dass im Fehlerfall die jeweilige Backup oder redundante Komponente, die jeweilige Aufgabe übernehmen kann. Bei mehreren redundanten Komponenten muss sichergestellt sein, dass nur eine der beiden oder mehreren Steuereinrichtungen, die jeweilige Steuerhoheit innehat. Außerdem dürfen nicht widersprüchliche Steuerungsbefehle für gleiche Steuerfunktionalitäten entstehen. Deshalb ist es notwendig, dass alle Steuerungskomponenten über dieselben Informationen oder Daten in dem Netzwerk verfügen.

Insofern müssen Fehler in Form von inkonsistenten Daten, die beispielsweise bei einer Datenübertragung über das verwendete Netzwerk korrumpiert sein können, erkannt werden. Eine Standard-Netzwerkumgebung, die weit verbreitet ist, basiert auf dem Ethernet-Protokoll. Die Verwendung von Ethernet-Infrastrukturen hat den Vorteil, dass standardisierte Netzwerkeinrichtungen und Verfahren zum Einsatz kommen können. In der Vergangenheit wurden jedoch auch proprietäre Datenbusse verwendet, um Steuerungskomponenten mit innerer Redundanz, also doppelt ausgelegter Funktionalität, miteinander zu verknüpfen.

Darüber hinaus ist es möglich, dass in dem Netzwerk eingesetzte Knoten fehlerhaft sind. Bekannt sind zum Beispiel Fehlertypen, bei denen eine Netzwerkeinrichtung mit hoher Frequenz Daten in das Netzwerk sendet, die keine für die anderen Steuereinrichtungen brauchbaren Daten enthalten. Man spricht auch von einem "Babbling Idiot". Die Netzwerkinfrastruktur kann dann derart durch hohe Datenraten belastet werden, dass echte Steuer- oder Sensordaten nicht mehr zwischen den noch funktionierenden Netzwerkeinrichtungen ausgetauscht werden können. Es ist wünschenswert, insbesondere solche Fehlverhalten in sicherheitsrelevanten Netzwerken zu behandeln und die vorliegenden Daten geeignet zu verarbeiten, um einen zuverlässigen Betrieb der nicht betroffenen Einrichtungen im Netzwerk zu gewährleisten.

In der Vergangenheit wurden Verfahren vorgeschlagen, bei denen der Datenaustausch zwischen vorgegebenen Kommunikationspartnern bandbreitenbegrenzt wurde. Defekte Netzwerkknoten können allerdings auch Datenpakete mit unzutreffenden Adressdaten erzeugen, was im Rahmen von einer dezidierten Bandbreitenbegrenzung nicht in jeder Netzwerktopologie, insbesondere nicht in einer ringförmigen Netzwerktopologie, zufriedenstellend behandelt werden kann.

Außerdem sind Verfahren bekannt, die auf einer synchronisierten Kommunikation der Netzwerkknoten untereinander basieren. Dabei werden bestimmte Zeitschlitze für den Datenaustausch zwischen vorgegebenen Kommunikationspartnern definiert. Solche Zeitschlitzverfahren erfordern eine aufwendige Synchronisation und spezielle Hardware-Einrichtungen.

EP1705839A1 beschreibt ein Verfahren, in dem Datenraten per VLAN am UNI Port limitiert werden. Eine disjunkte Segmentierung des Netzwerkes ist jedoch nicht vorgesehen.

Es ist daher eine Aufgabe der vorliegenden Erfindung, ein verbessertes Kommunikationsnetzwerk zu schaffen.

Demgemäß wird ein Kommunikationsnetzwerk mit einer Vielzahl von Netzwerkeinrichtungen vorgeschlagen. Das Kommunikationsnetzwerk hat eine Mehrzahl N von virtuellen Netzen, die in dem Kommunikationsnetzwerk derart implementiert sind, dass eine jede der sicherheitskritischen Netzwerkeinrichtungen über zumindest zwei virtuelle Netze an das Kommunikationsnetzwerk gekoppelt ist. Ferner hat das Kommunikationsnetzwerk eine Mehrzahl von Netzwerksegmenten. Dabei ist einem jeden der Netzwerksegmente eine Teilmenge der Netzwerkeinrichtungen zugeordnet, wobei eine jede an einem Randbereich eines Netzwerksegmentes angeordnete Netzwerkeinrichtung N Begrenzungseinheiten aufweist, wobei die jeweilige der N Begrenzungseinheiten einem jeweiligen der N virtuellen Netze zugeordnet ist und dazu eingerichtet ist, einen Datenempfang von dem jeweiligen virtuellen Netz zugehörigen Daten auf einen für das jeweilige virtuelle Netz vorbestimmten Schwellwert für die Datenübertragungsrate zu begrenzen.

Hierbei sind die Schwellwerte für das jeweilige virtuelle Netz vorbestimmt, das heißt insbesondere spezifisch hinsichtlich des virtuellen Netzes eingestellt.

Die Überwachung der Datenübertragungsrate und das mögliche Begrenzen eines Datenempfangs ermöglicht insbesondere die Behandlung von sogenannten "Babbling Idiots", also im Netzwerk vorliegende Netzwerkeinrichtungen, die aus einem Defekt heraus sinnlose oder nicht von anderen Einrichtungen im Netzwerk zu interpretierende Daten senden. Häufig werden diese "sinnlosen" Daten mit hoher Frequenz von den fehlerhaften Einrichtungen absetzt, sodass eine Belastung der Netzwerkinfrastruktur und Kommunikationspfade entstehen kann. Das Begrenzen der betroffenen Empfangsports bzw. das Blockieren des Datenempfangs für zu hohe Datenraten ermöglicht dennoch eine zuverlässige Datenkommunikation, selbst wenn Babbling Idiots vorliegen.

Falls beispielsweise Pakete durch ein Netzwerksegment hindurch geleitet werden müssen, weil sonst die Netzwerkeinrichtungen neben diesem Netzwerksegment nicht oder nicht über disjunkte Pfade erreichbar wären, können die Schwellwerte (Bandbreitengrenze), die durch das entsprechende Netzwerksegment hindurchgeleitet werden, spezifisch, insbesondere VLANspezifisch, begrenzt werden. Dadurch kann vermieden werden, dass aufgrund eines Datenpaketes, das von einem Babbling Idiot außerhalb eines Netzwerksegmentes erzeugt wurde, dieses eigentlich intakte Netzwerksegment abgetrennt wird.

Die virtuellen Netze sind über disjunkte Pfade, insbesondere physikalische disjunkte Pfade, in dem Kommunikationsnetzwerk implementiert.

Unter einer Datenübertragungsrate versteht man die digitale Datenmenge, die innerhalb einer Zeiteinheit über einen Übertragungskanal oder Kommunikationspfad übertragen wird. Man spricht auch von einer Datentransferrate, Datenrate, Übertragungsgeschwindigkeit, Verbindungsgeschwindigkeit, Bandbreite oder Kapazität. Eine gängige Angabe für eine Datenübertragungsrate lautet in Bit pro Sekunde.

Die maximale Datenüberragungsrate wird vorzugsweise in Abhängigkeit von der vorgesehenen Bandbreite des Kommunikationsnetzwerks bestimmt. Wenn aus der Topologie des Netzwerks und den zu realisierenden Funktionen alle für den fehlerfreien Betrieb vorgesehenen Datentransferraten zwischen den Netzwerkknoten bzw. Netzwerkeinrichtungen oder Sende- und Empfangsports bekannt sind, können die Begrenzungseinheiten entsprechend sensibel eingerichtet werden.

Daneben wird der Fehlerfall eines Babbling Idiots durch die Überprüfung der Datentransferrate und gegebenenfalls Begrenzung des Empfangs derart behandelt, dass zumindest ein fehlerfrei übertragender Kommunikationspfad für nicht gestörte oder von einer defekten Einrichtung versendete Daten vorliegt.

Durch die Verwendung virtueller Netze in dem Kommunikationsnetzwerk ist es auch möglich, die Schwellwerte einzelner Begrenzungseinheiten, insbesondere im Randbereich der einzelnen Netzwerksegmente, zu minimieren. Dadurch wird die Gesamtausfallwahrscheinlichkeit des Gesamtsystems Kommunikationsnetzwerk minimiert.

Für die Umsetzung des Konzepts der Begrenzungseinheiten ist insbesondere keinerlei Änderung an der Hardware der Standard-Switchkomponenten notwendig. Entweder können die Features hochwertiger Switch-Hardware benutzt werden, oder die Switch-Hardware kann durch ein relativ einfaches Vorschaltgerät ergänzt werden. Die verfügbare Bandbreite wird je nach Ausführungsform nicht oder nur in geringem Maße beeinträchtigt.

Beispielsweise kann das jeweilige Netzwerksegment nach außen hin über einen relativ kleineren Schwellwert für die Datenübertragungsrate als im Mittenbereich oder Innenraum des Netzwerksegments abgeschottet werden. Folglich haben Begrenzungseinheiten des Randbereichs einen kleineren Schwellwert für die Datenübertragungsrate als die Begrenzungseinheiten im Mittenbereich des Netzwerksegments. Im Mittenbereich des Netzwerksegments können auch keine Begrenzungseinheiten vorgesehen werden.

Insgesamt ergibt sich eine besonders zuverlässige Netzwerkanordnung, welche auch bei Störungen von Netzwerkknoten sicher funktioniert. Die durch den Einsatz der zumindest zwei virtuellen Netzte redundante Kommunikation ermöglicht eine konsistente Steuergerätekommunikation und aufwandsgünstige Fehleranalyse und Korrektur und eine aufwandsgünstige Behandlung von Fehlern durch Babbling Idiots.

Die Begrenzungseinheiten können insbesondere als Teil der Switch-Einrichtungen ausgeführt sein. Denkbar ist ferner eine Implementierung als Programm oder Programmcode zum Betreiben einer der Switch-Einrichtungen.

Bei einer Ausführungsform ist ein jeder der N Schwellwerte der N Begrenzungseinheiten einer der Netzwerkeinrichtungen kleiner als eine maximale Datenübertragungsrate des Kommunikationsnetzwerkes. Dadurch ist sichergestellt, dass die maximale Datenübertragungsrate des Kommunikationsnetzwerkes nicht überschritten werden kann.

Bei einer weiteren Ausführungsform umfasst eine jede Netzwerkeinrichtung eine Steuereinrichtung und eine mit der Steuereinrichtung gekoppelte Switch-Einrichtung, welche einen Empfangsport und einen Sendeport zum Senden und Empfangen von Daten über das Kommunikationsnetzwerk mit höchstens einer maximalen Datenübertragungsrate hat, wobei die N Begrenzungseinheiten dem Empfangsport zugeordnet sind und jeweils dazu eingerichtet sind, den Datenempfang von dem jeweiligen virtuellen Netz zugehörigen Daten an dem jeweiligen zugeordneten Empfangsport auf den für das jeweilige virtuelle Netz spezifischen Schwellwert für die Datenübertragungsrate zu begrenzen.

Die Kombination von einem Sende- und Empfangsport kann auch als ein Kommunikationsport der jeweiligen Einrichtung verstanden werden. Die virtuellen Netze werden insbesondere als Virtual Local Area Networks (VLANs) ausgebildet.

Bei einer weiteren Ausführungsform sind ausschließlich die an einem Randbereich eines Netzwerksegments angeordneten Netzwerkeinrichtungen jeweils mit den N Begrenzungseinheiten ausgestattet. Dadurch ist die Anzahl der notwendigen Begrenzungseinheiten minimiert. Damit ist diese Ausführungsform sehr kostengünstig.

Bei einer weiteren Ausführungsform umfassen die Netzwerkeinrichtungen zumindest zwei hinsichtlich ihrer Funktionalität redundante Netzwerkeinrichtungen, wobei Teilmengen bzw. Netzwerksegmente derart gebildet sind, dass einer jeden der Teilmengen höchstens eine der redundanten Netzwerkeinrichtungen zugeordnet ist. Hinsichtlich ihrer Funktionalität redundante Netzwerkeinrichtungen werden in unterschiedlichen Netzwerksegmenten angeordnet, so dass bei einem Ausfall eines Netzwerksegments zumindest noch eine redundante Netzwerkeinrichtung in einem anderen Netzwerksegment vorhanden ist und damit die Gesamtfunktionalität des Gesamtsystems nicht gefährdet ist.

Bei einer weiteren Ausführungsform sind die Teilmengen als disjunkte Teilmengen ausgebildet.

Bei einer weiteren Ausführungsform sind die virtuellen Netze derart in dem Kommunikationsnetzwerk implementiert, um ein Überschreiten des Schwellwertes für die Datenübertragungsrate an einer Begrenzungseinheit eines Netzwerksegments aufgrund eines Empfangs von Daten aus einem anderen Netzwerksegment zu vermeiden.

Dabei wird durch die Berücksichtigung der verschiedenen virtuellen Netzen, zum Beispiel verschiedener VLANs, erreicht, dass ein Segment nicht aufgrund von Paketen abgetrennt werden kann, die außerhalb des Segments eingespeist wurden. Das wird erreicht, indem die VLANs gezielt so konfiguriert werden, dass Pakete nicht durch ein Segment, insbesondere einen äußeren Ring, durch geleitet werden.

Alternativ zu VLANs können andere geeignete Virtualisierungstechnologien eingesetzt werden.

Bei einer weiteren Ausführungsform sind die virtuellen Netze derart in dem Kommunikationsnetzwerk implementiert, dass eine jede der Netzwerkeinrichtungen über zumindest zwei virtuelle Netze an das Kommunikationsnetzwerk gekoppelt ist und keines der virtuellen Netze eine Ring-Topologie aufweist. Durch die Vermeidung von Ring-Topologien ist sichergestellt, dass in dem Netzwerk keine kreisenden Pakete auftreten können.

Bei einer weiteren Ausführungsform sind die virtuellen Netze derart in dem Kommunikationsnetzwerk implementiert, dass für einen jeden Kommunikationspfad zwischen einem Sendeport und einem Empfangsport eine maximale Linkübertragungsrate eingestellt ist, wobei die Summe der N Schwellwerte der N Begrenzungseinheiten kleiner oder gleich der maximalen Linkübertragungsrate des zugeordneten Empfangsports ist. Beispielsweise kann beim Entwurf des Kommunikationsnetzwerkes abgeschätzt werden, welche Linkübertragungsraten vorliegen können. Die Begrenzungseinheiten können dann entsprechend sensibilisiert werden, so dass bei Überschreiten der maximalen Linkübertragungsrate der Datenempfang begrenzt wird.

Bei einer weiteren Ausführungsform sind die Daten mindestens zwei Prioritätsklassen zugeordnet, wobei die N Begrenzungseinheiten dazu eingerichtet sind, ausschließlich den Datenempfang einer höheren Prioritätsklasse zu begrenzen. Beispielsweise kann eine erste Prioritätsklasse besonders sicherheitsrelevante Daten betreffen und eine zweite Prioritätsklasse weniger kritische Daten. Beim Entwurf des Kommunikationsnetzwerks werden dann die maximalen Datentransferraten festgelegt und die Begrenzungseinheiten entsprechend eingestellt. An den Begrenzungseinheiten werden die verschiedenen Prioritätsklassen erfasst und die Daten in Abhängigkeit davon gefiltert oder begrenzt.

Das Kommunikationsnetzwerk kann eine Ethernet-Infrastruktur umfassen. Die Switch-Einrichtung kann auch als Bridge- oder Router-Einrichtung bezeichnet werden. Bei Netzwerkeinrichtungen spricht man auch von Netzwerk-Knoten, Knoten, Netzwerk-Komponenten oder Netzwerk-Elementen.

Als in den Netzwerkeinrichtungen vorgesehene Steuereinrichtungen kommen beispielsweise eine CPU, ein Mikroprozessor oder auch andere programmierbare Schaltkreise in Frage. Als Steuereinrichtung kann ferner eine Sensor- oder Aktoreinrichtung verstanden werden.

Das Kommunikationsnetzwerk oder Netzwerk-Protokoll sieht vorzugsweise Punkt-zu-Punkt-Verbindungen von einem Knoten oder einer Netzwerkeinrichtung zu einer anderen vor. Dabei kann eine bidirektionale oder Duplex-Kommunikation möglich sein.

Bei einer weiteren Ausführungsform sind die Netzwerkeinrichtungen jeweils als einzelner FPGA, ASIC, IC Chip oder festverdrahteter Mikroschaltkreis ausgeführt.

Bei einer weiteren Ausführungsform umfasst das Kommunikationsnetzwerk die Vielzahl der Netzwerkeinrichtungen und eine Anzahl von Kopplungs-Switcheinrichtungen, wobei die Kopplungs-Switcheinrichtungen jeweils ausschließlich über ein einziges virtuelles Netz an das Kommunikationsnetzwerk angekoppelt sind.

Vorzugsweise werden zumindest zwei Begrenzungseinheiten unterschiedlicher Netzwerkeinrichtungen verschiedene oder unterschiedliche Schwellwerte für die Datenübertragungsrate zugeordnet. Die Summe dieser Schwellwerte ist kleiner oder gleich der vorgegebenen maximalen Datenübertragungsrate in dem Kommunikationsnetzwerk. Die Schwellwerte für die Datenübertragungsrate können auch als Bandbreitengrenze bezeichnet werden.

Durch die Verwendung verschiedener Schwellwerte wird es insbesondere möglich, in dem Kommunikationsnetzwerk unterschiedliche Segmente oder Netzwerksegmente auszubilden. Die Netzwerksegmente werden dabei derart ausgebildet, dass sie als ganzes Segment ausfallen dürfen, ohne das Gesamtsystem in einen gefährlichen Zustand zu bringen, z.B. Netzwerksegmente mit gemeinsamer Stromversorgung. Ein Gesamtsystem, das von mehreren Stromversorgungen versorgt wird, muss ohnehin so aufgebaut sein, dass es den Ausfall einer Stromversorgung verkraften kann.

Dabei wird insbesondere eine mögliche Verschleppung einer Blockierung, wenn eine Netzwerkeinrichtung knapp unter der Bandbreitengrenze babbelt, durch Segmente, die mit Begrenzungseinheiten mit niedrigeren Bandbreitengrenzwerten abgegrenzt sind, gezielt auf ein Segment begrenzt.

Der jeweilige Schwellwert kann beispielsweise durch eine Prozentangabe bezogen auf die maximale physikalische Datenübertragungsrate der Netzwerkanordnung angegeben werden. So können beispielsweise verschiedene Schwellwerte bei 20%, 15%, 10%, 5% und 0% der maximalen physikalischen Datenübertragungsrate eingestellt werden. Ein Schwellwert von 0% entspricht dabei einer Blockierung. Die Schwellwerte können beispielsweise anhand der über den jeweiligen Link vorgesehenen geplante Datenübertragungsraten, eventuell zusätzlich eines Sicherheitsaufschlages, bestimmt werden.

Das Kommunikationsnetzwerk kann auch als Netzwerkanordnung bezeichnet werden und ist insbesondere Teil eines Fahrzeugs.

Die Netzwerkeinrichtungen können Sensoreinrichtungen oder Aktoreinrichtungen sein. Als Sensoreinrichtungen sind Drehzahlsensoren, Brems- oder Schaltsteuerungseinrichtungen denkbar. Es können auch Steuereinrichtungen eingesetzt sein, die beispielsweise ein Drive-by-Wire ermöglichen. Dabei werden beispielsweise Lenk- oder Beschleunigungsimpulse elektronisch über das Netzwerk an entsprechende Aktoren übergeben, so dass die gewünschte Reaktion des Fahrzeugs einsetzt.

Des Weiteren wird ein Verfahren zum Betreiben eines Kommunikationsnetzwerkes mit einer Vielzahl von Netzwerkeinrichtungen vorgeschlagen:
In einem ersten Schritt wird eine Mehrzahl N von virtuellen Netzen in dem Kommunikationsnetzwerk derart implementiert, dass eine jede der Netzwerkeinrichtungen über zumindest zwei virtuelle Netze an das Kommunikationsnetzwerk gekoppelt wird. In einem zweiten Schritt werden die Netzwerkeinrichtungen in einer Mehrzahl von Netzwerksegmenten angeordnet, wobei einem jeden der Netzwerksegmente eine Teilmenge der Netzwerkeinrichtungen zugeordnet wird, wobei eine jede an einem Randbereich eines Netzwerksegmentes angeordnete Netzwerkeinrichtung mit N Begrenzungseinheiten ausgestattet wird, wobei die jeweilige der N Begrenzungseinheiten einem jeweiligen der N virtuellen Netze zugeordnet wird und dazu eingerichtet wird, einen Datenempfang von dem jeweiligen virtuellen Netz zugehörigen Daten auf einen für das jeweilige virtuelle Netz vorbestimmten Schwellwert für die Datenübertragungsrate zu begrenzen.

Weiterhin wird ein Computerprogrammprodukt vorgeschlagen, welches auf einer oder mehrerer programmgesteuerten Einrichtung die Durchführung des wie oben erläuterten Verfahrens zum Betreiben einer Netzwerkanordnung veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Netzwerkeinrichtung in Frage.

Außerdem wird ein Datenträger mit einem gespeicherten Computerprogramm mit Befehlen vorgeschlagen, welche die Durchführung des wie oben erläuterten Verfahrens auf einer programmgesteuerten Einrichtung veranlasst.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens, der Netzwerkanordnung, der Netzwerkeinrichtung oder eines Netzwerkknotens. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: eine schematische Darstellung einer ersten Ausführungsform eines Kommunikationsnetzwerkes;
- Fig. 2: eine schematische Darstellung einer zweiten Ausführungsform eines Kommunikationsnetzwerkes;
- Fig. 3: eine Ausführungsform für eine Netzwerkeinrichtung; und
- Fig. 4: ein schematisches Ablaufdiagramm eines Ausführungsbeispiels eines Verfahrens zum Betreiben eines Kommunikationsnetzwerkes.

In den Figuren sind gleiche oder funktionsgleiche Elemente mit denselben Bezugszeichen versehen worden, sofern nichts anderes angegeben ist.

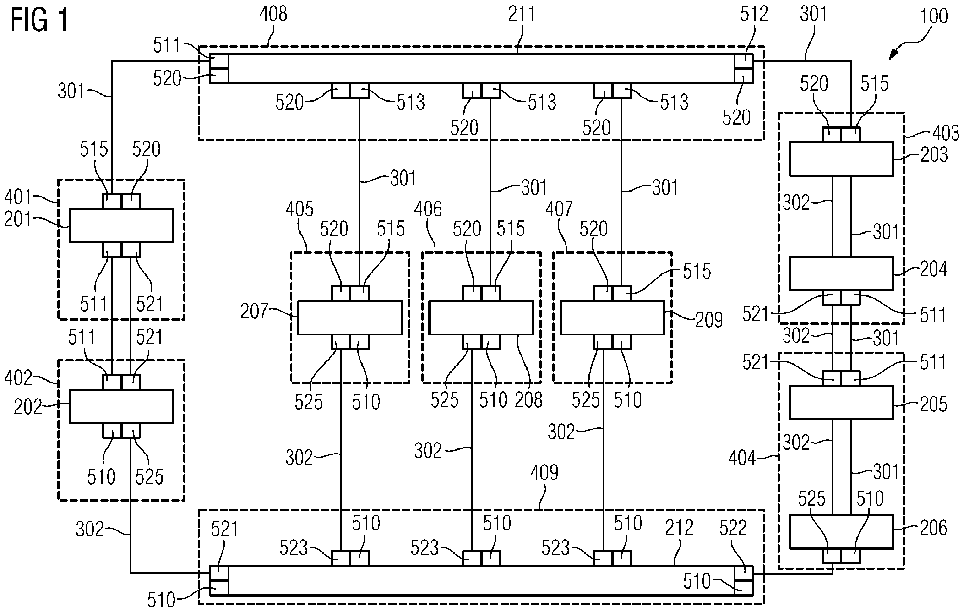

In der Fig. 1 ist eine schematische Darstellung einer ersten Ausführungsform eines Kommunikationsnetzwerkes 100 dargestellt. Das Kommunikationsnetzwerk 100 kann beispielsweise als Ethernet-Netzwerk in einem Fahrzeug eingesetzt werden.

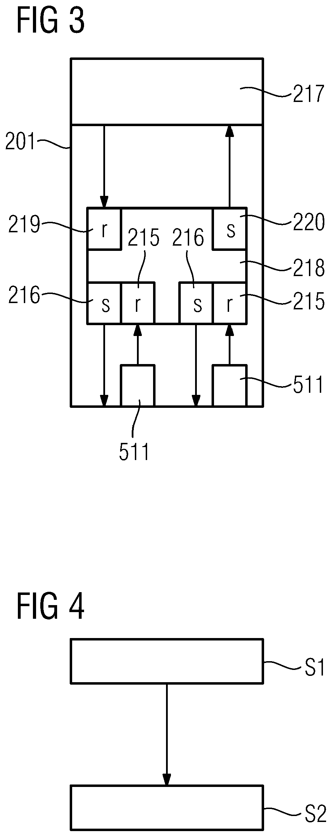

Das Kommunikationsnetzwerk 100 der Fig. 1 umfasst neun Netzwerkeinrichtungen 201-209 sowie zwei Kopplungsswitch-Einrichtungen oder Kopplungsswitche 211, 212. Die Netzwerkeinrichtungen 201-209 können im Folgenden auch als NetzwerkKnoten, Knoten oder Steuerungskomponenten bezeichnet werden, und haben jeweils eine Steuereinrichtung (siehe hierzu Fig. 3). Die Steuereinrichtungen sind angepasst, um bestimmte Aufgaben oder Funktionen zu vollziehen. Dies kann beispielsweise eine Sensorerfassung oder ein Aktor sein. Man kann sie auch als CPUs oder Mikroprozessoren implementieren. Denkbar ist zum Beispiel, dass eine Steuereinrichtung zum Erfassen eines Pedalstandes oder einer Lenkbewegung im Fahrzeug eingerichtet ist. Es ist zum Beispiel denkbar, dass eine Steuereinrichtung ein Steuersignal bzw. Steuerdaten an eine weitere Steuereinrichtung im Netzwerk 100 sendet. Dabei ist insbesondere bei sicherheitsrelevanten Anwendungen in Kraftfahrzeugen, beispielsweise beim Drive-by-Wire zu gewährleisten, dass die Steuerdaten an allen Netzwerk-Knoten konsistent vorliegen.

Beispielsweise können die Netzwerkeinrichtungen 201-206 als Sensoren oder Aktoren ausgebildet sein. Die Netzwerkeinrichtungen 207-209 bilden drei Steuerrechner.

Ferner sind in dem Kommunikationsnetzwerk 100 der Fig. 1 zwei virtuelle Netze 301, 302 ausgebildet. Dabei charakterisiert das Bezugszeichen 301 solche virtuellen Leitungen, die einem ersten virtuellen Netz 301 zuzuordnen sind. Entsprechend charakterisiert das Bezugszeichen 302 solche virtuellen Leitungen, die dem zweiten virtuellen Netz 302 zuzuordnen sind. Die Kopplungsswitche 211, 212 sind jeweils nur mit einem einzigen virtuellen Netz 301 oder 302 gekoppelt. So ist der Kopplungsswitch 211 mit dem ersten virtuellen Netz 301 gekoppelt, wohingegen der Kopplungsswitch 212 mit dem zweiten virtuellen Netz 302 gekoppelt ist. Die Netzwerkeinrichtungen 201-209 sind demgegenüber mit beiden virtuellen Netzen 301, 302 an das Kommunikationsnetzwerk 100 gekoppelt.

Des Weiteren sind im Kommunikationsnetzwerk 100 der Fig. 1 neun Netzwerksegmente 401-409 vorgesehen. Dabei ist jeden der Netzwerksegmente 401-409 eine Teilmenge der Netzwerkeinrichtungen 201-210 zugeordnet. Die Teilmengen sind disjunkte Teilmengen. An einem Randbereich eines Netzwerksegmentes 401-409 angeordnete Netzwerkeinrichtungen 201-210 haben N Begrenzungseinheiten 510-523. N entspricht der Anzahl der virtuellen Netze 301, 302 in dem Kommunikationsnetzwerk 100 der Fig. 1 (N=2). Dabei ist die jeweilige der zwei Begrenzungseinheiten einer Netzwerkeinrichtung einem jeweiligen der zwei virtuellen Netze 301, 302 zugeordnet und dazu eingerichtet, einen Datenempfang von dem jeweiligen Netz 301, 302 zugehörigen Daten auf einen für das jeweilige virtuelle Netz 301, 302 vorbestimmten Schwellwert für die Datenübertragungsrate zu begrenzen.

Für die in Fig. 1 verwendeten Begrenzungseinheiten gilt hinsichtlich der Bezugszeichen folgende Syntax: Die Hunderterstelle 5 charakterisiert die Einheit als Begrenzungseinheit. Die Zehnerstelle zeigt die Zugehörigkeit zu dem virtuellen Netz 301 oder 302. Die Einerstelle indiziert den Schwellwert der Begrenzungseinheit. Daher sind folgende Begrenzungseinheiten in der Fig. 1 verwendet:
510: Begrenzungseinheit (Hunderterstelle: 5) des ersten virtuellen Netzes (Zehnerstelle: 1) mit einem Schwellwert von 0% (Schwellwert: 0),
511: Begrenzungseinheit des ersten virtuellen Netzes mit einem Schwellwert von 5%,
512: Begrenzungseinheit des ersten virtuellen Netzes mit einem Schwellwert von 10%,
513: Begrenzungseinheit des ersten virtuellen Netzes mit einem Schwellwert von 15%, und
514: Begrenzungseinheit des ersten virtuellen Netzes mit einem Schwellwert von 20%.
515: Begrenzungseinheit des ersten virtuellen Netzes mit einem Schwellwert von 30%.
520: Begrenzungseinheit des zweiten virtuellen Netzes mit einem Schwellwert von 0%,
521: Begrenzungseinheit des zweiten virtuellen Netzes mit einem Schwellwert von 5%,
522: Begrenzungseinheit des zweiten virtuellen Netzes mit einem Schwellwert von 10%,
523: Begrenzungseinheit des zweiten virtuellen Netzes mit einem Schwellwert von 15%, und
524: Begrenzungseinheit des zweiten virtuellen Netzes mit einem Schwellwert von 20%.
525: Begrenzungseinheit des zweiten virtuellen Netzes mit einem Schwellwert von 30%.

Insgesamt zeigt die Fig. 1 ein parallel-redundantes Kommunikationsnetzwerk 100 mit drei Steuerrechnern 207-209, an welche zwei äußere Ringe mit Knoten 201, 202 und 203-206 angeschlossen sind.

Der geplante Verkehr zwischen den einzelnen Netzwerksegmenten 401-409 kann beispielsweise wie folgt ausgestaltet sein: 5% zwischen den Netzwerkeinrichtungen 201, 202 und den Kopplungsswitchen 211, 212, 10% zwischen den Netzwerksegmenten 403, 404 und den Kopplungsswitchen 211, 212 und jeweils 15% zwischen den Netzwerksegmenten 405-407 und den Kopplungsswitchen 211, 212.

Die beiden dargestellten virtuellen Netze 301, 302 sind an allen Knoten 201-212 bandbreitenbegrenzt, zum Beispiel auf 30%. Solche Knoten, die nicht mit einer virtuellen Leitung 301, 302 eines bestimmten virtuellen Netzes angeschlossen sind, leiten Pakete dieses virtuellen Netzes auch nicht weiter. Beispielsweise sind in der Fig. 1 alle Knoten redundant vorhanden, so können beispielsweise die Knoten 203 und 206 redundant zueinander sein. Der Knoten 204 ist redundant zum Knoten 201, der Knoten 205 redundant zum Knoten 202. Ferner können die Kopplungsswitche 211 und 212 zueinander redundant sein. Auch die Steuerrechner 207-209 sind redundant zueinander. Wenn beispielsweise einer der Knoten 201-212 ausfällt bzw. von der Kommunikation abgetrennt wird, bleibt das Gesamtsystem funktionsfähig. Beispielsweise kann hier redundant die Versorgung durch unterschiedliche Stromkreise bezeichnen. Würde eine Stromversorgung ausfallen, bliebe von jedem Paar redundanter Knoten, das heißt gleichen Typs, einer versorgt und an das Kommunikationsnetz 100 angebunden. Die Netzwerksegmente 401-409 sind entsprechend so gewählt, dass bei der Abtrennung eines Netzwerksegments 401-409 von jedem Paar redundanter Knoten 201-212 mindestens einer an das Kommunikationsnetz 100 angebunden bleibt. Das heißt, falls zwei redundante Knoten, beispielsweise die Knoten 203 und 206, in einem Außenring installiert sind, ist zwischen diesen die Bandbreite mit den berechneten Schwellwerten oder Bandbreitengrenzwerten in beiden Richtungen begrenzt. Ansonsten ist es auch möglich, nur in ausgewählten Stellen Bandbegrenzungseinheiten 510-523 vorzusehen.

Durch die virtuellen Verbindungen 301, 302 werden auf Basis der ringförmigen Topologie des Kommunikationsnetzwerks 100 zwei disjunkte, loop-freie Pfade zwischen allen Steuerrechnern 207-209 untereinander und zwischen den Steuerrechnern 207-209 und den Knoten 201-206 gebildet.

Die Funktion des Kommunikationsnetzwerkes 100 in der Ausführungsform der Fig. 1 wird anhand der drei folgenden Beispiele verdeutlicht:
In dem ersten Beispiel wird angenommen, dass der Knoten 206 der Babbling Idiot ist: Der Knoten 206 empfängt Daten von den Knoten 203, 204 und 205 über das zweite virtuelle Netz 302. Er fügt beliebig viele Daten auf diesem virtuellen Netz 302 hinzu, so dass die geplante Bandbreite von beispielsweise 10% überschritten wird. Durch die Bandbreitenbegrenzung der Bandbegrenzungseinheit 522 des Kopplungsswitches 212 werden zufällig ausgewählte Pakete verworfen. Im ungünstigsten Fall werden alle gültigen Pakete von den Knoten 203, 204 und 205 verworfen. Dadurch wird aber die geplante Bandbreite, die über diesen Pfad 302 in den Kopplungsswitch 212 übertragen wird, nicht überschritten, so dass die von den Knoten 202 und 201 empfangenen Daten nicht beeinträchtigt werden. Sollte der Knoten 206 auch Daten von dem ersten virtuellen Netz (VLAN) 301 zu dem unteren Kopplungsswitch 212 senden, werden diese von dem Kopplungsswitch 212 nicht weitergeleitet und haben keine Auswirkungen.

In die andere Richtung sendet der Knoten 206 ebenfalls beliebig viele Daten, im schlimmsten Fall auf den beiden virtuellen Netzen 301 und 302. Dadurch wird die Bandbreite auf beiden virtuellen Netzen 301, 302 überschritten, durch die Begrenzung zwischen dem Knoten 205 und 204 werden wieder beliebige Pakete verworfen. Dadurch gehen gegebenenfalls alle Pakete, die über den unteren Kopplungsswitch 212 an die Knoten 203, 204 und 205 gesendet wurden, verloren. Gleichzeitig wird aber durch die Begrenzung an dieser Stelle sichergestellt, dass für die Pakete von den Knoten 203 und 204 ausreichend Bandbreite zur Verfügung steht, um über den oberen Kopplungsswitch 211 des ersten virtuellen Netzes 301 mit den Steuerrechnern 207, 208 und 209 zu kommunizieren, da hier eine Begrenzungseinheit 512 mit höherem Schwellwert vorgesehen ist. Damit ist das Netzwerksegment 404 mit den Knoten 205 und 206 von der Kommunikation in dem Kommunikationsnetzwerk 100 abgetrennt, alle anderen Knoten können aber noch miteinander kommunizieren.

In dem folgenden zweiten Beispiel wird angenommen, dass der erste Steuerrechner 207 der Babbling Idiot ist:
Der Steuerrechner 207 könnte im schlimmsten Falle in beide Richtungen auf beiden virtuellen Netzen 301, 302 mit der maximalen Bandbreite babbeln. Die gebabbelte Bandbreite würde dann an beiden Kopplungsswitches 211, 212 auf 15% begrenzt. Hierzu kämen die Bandbegrenzungseinheiten 513 und 523 zum Einsatz. Diese 15% Bandbreite würden in die beiden äußeren Ringe und zu den anderen Steuerrechnern 208, 209 vordringen. Zwischen den Knoten 201 und 202 sowie zwischen den Knoten 204 und 205 würden diese auf Bandbegrenzungseinheiten 511, 521 treffen. Damit wären aufgrund der in das erste VLAN 301 gebabbelten Pakete die Knoten 202, 205 nicht mehr über das erste VLAN 301 erreichbar. Gleichzeitig würden quasi spiegelverkehrt über das unter VLAN 302 gebabbelte Paket zwischen dem Knoten 201 und 202 sowie zwischen dem Knoten 204 und 205 auf eine Bandbegrenzung durch die Bandbegrenzungseinheiten 511, 512 treffen. Damit wären die Knoten 203, 204 und 201 nicht mehr über das unter VLAN 302 erreichbar. Der Babbling Idiot im Steuerrechner 207 stört damit, falls er in allen möglichen Richtungen über alle möglichen virtuellen Netze 301, 302 babbelt, die Redundanz aller Kommunikationsverbindungen, es bleiben aber alle Knoten nicht redundant in dem Kommunikationsnetzwerk 100 miteinander verbunden.

In dem folgenden dritten Beispiel wird angenommen, dass der obere Kopplungsswitch 211 der Babbling Idiot ist. Der obere Kopplungsswitch 211 kann nur über das erste VLAN 301 mit der maximal zulässigen Bandbreite fluten. Er hat allerdings keine Möglichkeit, Pakete in das zweite VLAN 302 zu senden, da keiner seiner Nachbarknoten Pakete des zweiten VLANs 302 von ihm akzeptiert. Demnach bleibt eine nicht redundante Verbindung zwischen allen anderen Knoten über das zweite VLAN 302 bestehen.

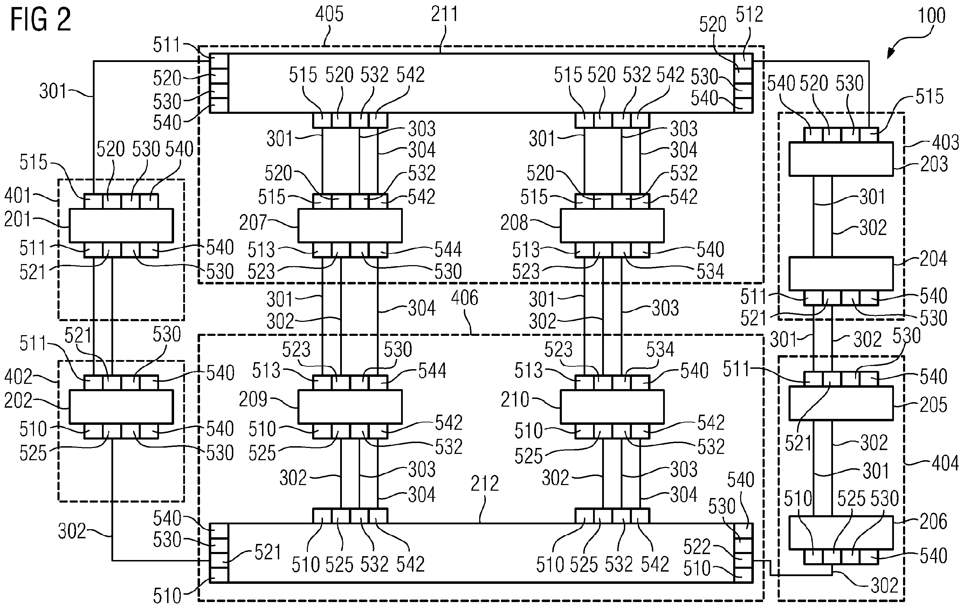

In Fig. 2 ist eine schematische Darstellung einer zweiten Ausführungsform eines Kommunikationsnetzwerkes 100 dargestellt. Das Kommunikationsnetzwerk 100 der Fig. 2 weist die Netzwerkeinrichtungen 201-206 auf, die beispielsweise als Sensoren oder Aktoren ausgebildet sind. Ferner hat das Kommunikationsnetzwerk 100 der Fig. 2 vier Steuerrechner 207-210 und zwei Kopplungsswitche 211, 212.

Damit ist das Kommunikationsnetzwerk 100 der Fig. 2 als ein dreifach ringförmiges Netzwerk ausgebildet. Ein innerer Ring wird durch die vier Steuerrechner 207-210 gebildet, wohingegen zwei äußere Ringe mit den Knoten 201-206 vorgesehen sind. Wie in dem Ausführungsbeispiel der Fig. 1 können die Knoten 201-206 drei Paare redundanter Knoten abbilden. Ferner sind in dem Ausführungsbeispiel der Fig. 2 vier virtuelle Netze 301-304 implementiert, deren virtuelle Leitungen jeweils über ihre charakteristischen Bezugszeichen 301-304 bezeichnet sind. Virtuelle Leitungen des ersten virtuellen Netzes 301 sind beispielsweise mit dem Bezugszeichen 301 versehen.

Der geplante Verkehr in dem Kommunikationsnetzwerk 1 zwischen den einzelnen Netzwerkeinrichtungen ist beispielsweise wie folgt (Dabei ist der geplante Verkehr für die vier virtuellen Netze 301-304 hinsichtlich einer Prozentangabe der Bandbreite konkateniert):
Zwischen Knoten 201 und Kopplungsswitch 211: 5%, 0%, 0%, 0%
Zwischen Knoten 201 und 202: 5%, 5%, 0%, 0%,
Zwischen Knoten 202 und Kopplungsswitch 212: 0%, 5%, 0%,0%,
Zwischen Knoten 206 und Kopplungsswitch 212: 0%, 10%, 0%, 0%,
Zwischen Knoten 204 und 205: 5%, 5%, 0%, 0%,
Zwischen Knoten 203 und Kopplungsswitch 211: 10%, 0%, 0%, 0%,
Zwischen Steuerrechner 207 und Kopplungsswitch 211: 15%, 0%, 10%, 10%,
Zwischen Steuerrechner 208 und Kopplungsswitch 211: 15%, 0%, 10%, 10%,
Zwischen Steuerrechner 207 und Steuerrechner 209: 15%, 15%, 0%, 10%,
Zwischen Steuerrechner 208 und Steuerrechner 210: 15%, 15%, 10%, 0%,
Zwischen Steuerrechner 209 und Kopplungsswitch 212: 0%, 15%, 10%, 10%,
Zwischen Steuerrechner 210 und Kopplungsswitch 212: 0%, 15%, 10%, 10%.

Auch in der Fig. 2 sind die Netzwerksegmente 401-406 so gewählt, dass bei der Abtrennung eines Netzwerksegmentes 401-406 von jedem Paar redundanter Knoten 203, 206; 204, 201; 205, 202 mindestens einer an das Kommunikationsnetz 100 angebunden bleibt.

Die Funktion des Kommunikationsnetzwerkes 100 der Fig. 2 wird anhand der folgenden drei Beispiele verdeutlicht.

In dem folgenden ersten Beispiel wird angenommen, dass der Knoten 206 der Babbling Idiot ist:
Der Knoten 206 empfängt Daten von den Knoten 203, 204 und 205 über das zweite VLAN 302. Der Knoten 206 fügt beliebig viele Daten auf dieses virtuelle Netz 302 hinzu, so dass die geplante Bandbreite von beispielsweise 10% überschritten wird. Durch die Bandbegrenzungseinheit 522 des unteren Kopplungsswitches 212 werden zufällig ausgewählte Pakete verworfen. Im ungünstigsten Fall werden alle gültigen Pakete von den Knoten 203, 204, 205 verworfen. Dadurch wird aber die geplante Bandbreite, die über diesen Pfad in den unteren Kopplungsswitch 212 übertragen wird, nicht überschritten, so dass die von den Knoten 201 und 202 empfangenen Daten nicht beeinträchtigt werden.

Sollte der Knoten 206 auch Daten auf einem anderen als dem zweiten VLAN 302 zu dem unteren Kopplungsswitch 212 übertragen, werden diese von dem Kopplungsswitch 212 nicht weitergeleitet und haben keine Auswirkungen. In die andere Richtung (nach oben in der Fig. 2) sendet der Knoten 206 ebenfalls beliebig viele Daten, im schlimmsten Falle auf dem ersten VLAN 301 und dem zweiten VLAN 302. Dabei wird die Bandbreite auf beiden VLANs 301, 302 überschritten, durch die Begrenzung zwischen den Knoten 205 und 204 werden hier beliebige Pakete verworfen. Dadurch gehen gegebenenfalls alle Pakete, die über den unteren Kopplungsswitch 212 an die Knoten 203, 204, 205 gesendet wurden, verloren. Gleichzeitig wird aber durch die Begrenzung an dieser Stelle sichergestellt, dass für die Pakete von dem Knoten 203 und dem Knoten 204 ausreichend Bandbreite zur Verfügung steht, um über den oberen Kopplungsswitch 211 mit den Steuerrechnern 207-210 zu kommunizieren, da hier eine Begrenzungseinheit 512 mit höherem Schwellwert vorgesehen ist. Damit ist das Netzwerksegment 404 mit den Knoten 205 und 206 von der Kommunikation abgetrennt, alle anderen Knoten können aber noch miteinander kommunizieren.

In dem folgenden zweiten Beispiel wird angenommen, dass der Steuerrechner 207 der Babbling Idiot ist.

Der Steuerrechner 207 könnte im schlimmsten Fall in beiden Richtungen auf allen VLANs 301-304 mit der maximalen Bandbreite babbeln. Dadurch würden das VLAN 303 und 304 komplett geflutet und könnten keine gesicherte Information zur Übertragung mehr leisten. Lediglich die Verbindung zwischen den Steuerrechnern 208 und 210 könnte noch über das dritte VLAN 303 genutzt werden, da hier eine höhere Bandbreite von 20% zulässig ist. In Richtung des oberen Kopplungsswitches 211 könnte er mit 30% Bandbreite Pakete des ersten VLANs 301 versenden. Diese Pakete würden in die äußeren Ringe der Netzwerksegmente 401, 402; 403, 404 eindringen und zwischen den Steuerrechnern 209 und 210 zwischen den Knoten 201 und 202 sowie zwischen den Knoten 204 und 205 auf eine Bandbreitenbegrenzung treffen. Damit wären die Knoten 202, 205 und 206 sowie der Steuerrechner 210 nicht mehr über das erste VLAN 301 erreichbar. Gleichzeitig könnten Pakete auf dem zweiten VLAN 302 in Richtung des Steuerrechners 209 senden, die Bandbreite ist dabei auf 15% begrenzt. Quasi spiegelverkehrt würden diese Pakete zwischen den Knoten 201 und 202 sowie zwischen den Knoten 204 und 205 auf eine Bandbreitenbegrenzung treffen. Damit wären die Knoten 203, 204 sowie 201 und der Steuerrechner 208 nicht mehr über das VLAN 301 erreichbar. Der Babbling Idiot 207 im Steuerrechnerring stört damit, falls er in alle möglichen Richtungen über alle möglichen VLANs 301-304 babbelt, die Redundanz aller Kommunikationsverbindungen, es bleiben aber alle Knoten 201-210 nicht-redundant miteinander verbunden.

In dem folgenden dritten Beispiel wird angenommen, dass der obere Kopplungsswitch 211 der Babbling Idiot ist:
Der obere Kopplungsswitch 211 kann das erste, das dritte und das vierte VLAN 301, 303, 304 mit der maximal zulässigen Bandbreite fluten. Er hat allerdings keine Möglichkeit, Pakete über das zweite VLAN 302 zu senden, da keiner seiner Nachbarknoten Pakete des zweiten VLANs 302 von ihm akzeptiert. Demnach bleibt mindestens eine nicht-redundante Verbindung zwischen allen anderen Knoten über das zweite VLAN 302 bestehen.

In einer weiteren Ausführungsform könnte die oben beschriebene Ausführungsform der Fig. 2 auch in einem Netzwerk mit beliebiger Netzwerktopologie zur Anwendung kommen, wenn die Traffic Patterns in diesem Netzwerk a priori bekannt sind.

Durch die vorliegende Verwendung virtueller Netze und der Netzwerksegmente und der darin verwendeten VLAN-basierten Bandbegrenzung ist es möglich, Babbling Idiots in einer Ethernet-basierten Umgebung tolerieren zu können, ohne im Falle eines beliebigen Einfachfehlers die Konnektivität zu so vielen Knoten, insbesondere zu redundanten Knoten, zu verlieren, dass ein sicherer Betrieb des gesamten Systems nicht mehr möglich wäre. Hierbei kann auf spezielle Hardware verzichtet werden, es ist noch nicht einmal eine spezielle Software in der CPU des jeweiligen Switches erforderlich. Vielmehr ist eine statische Konfiguration ausreichend, da die Bandbegrenzungseinheiten nur Schwellen für die Datenübertragungsrate definieren, Ports und deren Zuordnung aber nicht geändert werden.

Die Fig. 3 zeigt eine Ausführungsform für eine einfache Netzwerkeinrichtungen 201, die eine Steuereinrichtung 217 und eine Switch-Einrichtung 218 hat. Die Switch-Einrichtung 218 hat jeweils zwei an das Kommunikationsnetzwerk 100 gekoppelte Empfangsports 215 und Sendeports 216 zum Aus- bzw. Einkoppeln von Daten. Ferner ist die Steuereinrichtung oder CPU 217 über Sende- und Empfangsports 220, 219 mit der Switch-Einrichtung 218 kommunikativ verbunden. Den Empfangsports 215 ist je eine Begrenzungseinheit 511 zugeordnet, die bei Überschreiten einer festgelegten maximalen Empfangsdatenrate einen Datentransfer begrenzt.

In Fig. 4 ist ein schematisches Ablaufdiagramm eines Ausführungsbeispiels eines Verfahrens zum Betreiben eines Kommunikationsnetzwerkes 100 dargestellt, welches eines Vielzahl von Netzwerkeinrichtungen 201-210, eine Mehrzahl N von virtuellen Netzen 301-304 und eine Mehrzahl von Netzwerksegmenten 401-409 aufweist. Beispiele für solche Kommunikationsnetzwerke 100 sind in den Fig. 1 und 2 dargestellt.

Das Verfahren der Fig. 4 weist die folgenden Schritte S1 und S2 auf:
In Schritt S1 wird die Mehrzahl N von virtuellen Netzen 301-304 in dem Kommunikationsnetzwerk 100 derart implementiert, dass eine jede der Netzwerkeinrichtungen 201-210 über zumindest zwei virtuelle Netze 301-304 an das Kommunikationsnetzwerk 100 gekoppelt wird.

In Schritt S2 werden die Netzwerkeinrichtungen 201-210 derart in der Mehrzahl der Netzwerksegmente 401-409 angeordnet, dass einem jeden der Netzwerksegmente 401-409 eine Teilmenge der Netzwerkeinrichtungen 201-210 zugeordnet wird. Dabei wird eine jede an einem Randbereich eines Netzwerksegmentes 401-409 angeordnete Netzwerkeinrichtung 201-210 mit N Begrenzungseinheiten ausgestattet, wobei die jeweilige der N Begrenzungseinheiten einem jeweiligen der N virtuellen Netze 301-304 zugeordnet wird und dazu eingerichtet wird, einen Datenempfang von dem jeweiligen virtuellen Netz 301-304 zugehörigen Daten auf ein für das jeweilige Netz 301-304 vorgeschriebenen Schwellwert für die Datenübertragungsrate zu begrenzen.

Obwohl die Erfindung im Detail durch das bevorzugte Ausführungsbeispiel näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen. Insbesondere können Ausführungsformen der Netzwerkanordnung weitere netzwerkfähige Elemente aufweisen, die auch einen Babbling Idiot darstellen können.

## Patentansprüche

1. Kommunikationsnetzwerk (100) mit einer Vielzahl von Netzwerkeinrichtungen (201-210), mit:
einer Mehrzahl N von virtuellen Netzen (301-304), die in dem Kommunikationsnetzwerk (100) derart implementiert sind, dass eine jede der Netzwerkeinrichtungen (201-210) über zumindest zwei virtuelle Netze (301-304) an das Kommunikationsnetzwerk (100) gekoppelt ist, wobei die virtuellen Netze (301-304) über disjunkte Pfade in dem Kommunikationsnetzwerk (100) implementiert sind, und
einer Mehrzahl von Netzwerksegmenten (401-409), wobei einem jeden der Netzwerksegmente (401-409) eine Teilmenge der Netzwerkeinrichtungen (201-210) zugeordnet ist, wobei die Teilmengen disjunkte Teilmengen sind, wobei eine jede Netzwerkeinrichtung (201-210), die an einem Randbereich der Netzwerksegmente (401-409) angeordnet ist, N Begrenzungseinheiten aufweist (510-515, 520-525, 530-534, 540-544), wobei die jeweilige der N Begrenzungseinheiten (510-515, 520-525, 530-534, 540-544) einem jeweiligen der N virtuellen Netze (301-304) zugeordnet ist und dazu eingerichtet ist, einen Datenempfang von dem jeweiligen virtuellen Netz (301-304) zugehörigen Daten auf einen für das jeweilige virtuelle Netz (301-304) vorbestimmten Schwellwert für die Datenübertragungsrate zu begrenzen.

2. Kommunikationsnetzwerk nach Anspruch 1, wobei die disjunkten Pfade physikalische disjunkte Pfade sind.

3. Kommunikationsnetzwerk nach Anspruch 1 oder 2, wobei mindestens eine Netzwerkeinrichtung (201-210) eine Steuereinrichtung (213) und eine mit der Steuereinrichtung (213) gekoppelte Switch-Einrichtung (214) umfasst, welche mindestens je einen Empfangsport (215) und einen Sendeport (216) zum Senden und Empfangen von Daten über das Kommunikationsnetzwerk (100) mit einer maximalen Datenübertragungsrate hat, wobei die N Begrenzungseinheiten (510-515, 520-524, 530-534, 540-544) den Empfangsports (215) zugeordnet sind und jeweils dazu eingerichtet sind, den Datenempfang von dem jeweiligen virtuellen Netz (301-304) zugehörigen Daten an dem jeweiligen zugeordneten Empfangsport (215) auf den für das jeweilige virtuelle Netz spezifischen Schwellwert für die Datenübertragungsrate zu begrenzen.

4. Kommunikationsnetzwerk nach einem der Ansprüche 1 bis 3, wobei ausschließlich die an einem Randbereich eines Netzwerksegments (401-409) angeordneten Netzwerkeinrichtungen (201-210) jeweils mit den N Begrenzungseinheiten (510-515, 520-525, 530-534, 540-544) ausgestattet sind.

5. Kommunikationsnetzwerk nach einem der Ansprüche 1 bis 4, wobei die Netzwerkeinrichtungen (201-210) zumindest zwei hinsichtlich ihrer Funktionalität redundante Netzwerkeinrichtungen (201-210) umfassen, wobei die Teilmengen derart gebildet sind, dass einer jeden der Teilmengen höchstens eine der redundanten Netzwerkeinrichtungen (201-210) zugeordnet ist.

6. Kommunikationsnetzwerk nach einem der Ansprüche 1 bis 5, wobei die virtuellen Netze (301-304) derart in dem Kommunikationsnetzwerk (100) implementiert sind, um ein Überschreiten des Schwellwertes für die Datenübertragungsrate an einer Begrenzungseinheit (510-515, 520-525, 530-534, 540-544) eines Netzwerksegments (401-409) aufgrund eines Empfangs von Daten aus einem anderen Netzwerksegment (401-409) zu vermeiden, wobei die virtuellen Netze (301-304) so konfiguriert sind, dass Datenpakete nicht durch das Netzwerksegment (401-409) durch geleitet werden.

7. Kommunikationsnetzwerk nach einem der Ansprüche 1 bis 6, wobei die virtuellen Netze (301-304) derart in dem Kommunikationsnetzwerk (100) implementiert sind, dass eine jede der Netzwerkeinrichtungen (201-210) über zumindest zwei virtuelle Netze (301-304) an das Kommunikationsnetzwerk (100) gekoppelt ist und keines der virtuellen Netze (301-304) eine Ring-Topologie aufweist.

8. Kommunikationsnetzwerk nach einem der Ansprüche 1 bis 7, wobei die virtuellen Netze (301-304) derart in dem Kommunikationsnetzwerk (100) implementiert sind, dass für einen jeden Kommunikationspfad zwischen einem Sendeport (216) und einem Empfangsport (215) eine maximale Linkübertragungsrate bestimmt ist, wobei die Summe der N Schwellwerte der N Begrenzungseinheiten (510-515, 520-525, 530-534, 540-544) kleiner oder gleich der maximalen Linkübertragungsrate des zugeordneten Empfangsports (215) ist.

9. Kommunikationsnetzwerk nach einem der Ansprüche 1 bis 8, wobei die Daten mindestens zwei Prioritätsklassen zugeordnet sind, wobei die N Begrenzungseinheiten (510-515, 520-525, 530-534, 540-544) dazu eingerichtet sind, die Prioritätsklassen zu erfassen und den Datenempfang in Abhängigkeit der Prioritätsklassen zu begrenzen.

10. Kommunikationsnetzwerk nach einem der Ansprüche 1 bis 9, wobei das Kommunikationsnetzwerk (100) ein Ethernet-Netzwerk ist.

11. Kommunikationsnetzwerk nach einem der Ansprüche 1 bis 10, wobei die Netzwerkeinrichtungen (201-210) jeweils als einzelner FPGA, ASIC, IC Chip oder festverdrahteter Mikroschaltkreis ausgeführt sind.

12. Kommunikationsnetzwerk nach einem der Ansprüche 1 bis 11, wobei das Kommunikationsnetzwerk (100) die Vielzahl der Netzwerkeinrichtungen (201-210) und eine Anzahl von Kopplungs-Switcheinrichtungen (211, 212) umfasst, wobei die Kopplungs-Switcheinrichtungen (211, 212) jeweils ausschließlich über ein einziges virtuelles Netz (301-304) an das Kommunikationsnetzwerk (100) angekoppelt sind.

13. Verfahren zum Betreiben eines Kommunikationsnetzwerkes (100) mit einer Vielzahl von Netzwerkeinrichtungen (201-210), mit den Schritten:
Implementieren (S1) einer Mehrzahl N von virtuellen Netzen (301-304) in dem Kommunikationsnetzwerk (100) derart, dass eine jede der Netzwerkeinrichtungen (201-210) über zumindest zwei virtuelle Netze (301-304) an das Kommunikationsnetzwerk (100) gekoppelt wird, und die virtuellen Netze (301-304 über disjunkte Pfade in dem Kommunikationsnetzwerk (100) implementiert sind, und
Anordnen (S2) der Netzwerkeinrichtungen (201-210) in einer Mehrzahl von Netzwerksegmenten (401-409), wobei einem jeden der Netzwerksegmente (401-409) eine Teilmenge der Netzwerkeinrichtungen (201-210) zugeordnet wird, wobei die Teilmengen disjunkte Teilmengen sind, wobei eine jede Netzwerkeinrichtung (201-210), die an einem Randbereich eines Netzwerksegmentes (401-409) angeordnet ist, mit N Begrenzungseinheiten (510-515, 520-525, 530-534, 540-544) ausgestattet wird, wobei die jeweilige der N Begrenzungseinheiten (510-515, 520-525, 530-534, 540-544) einem jeweiligen der N virtuellen Netze (301-304) zugeordnet wird und dazu eingerichtet wird, einen Datenempfang von dem jeweiligen virtuellen Netz (301-304) zugehörigen Daten auf einen für das jeweilige virtuelle Netz (301-304) vorbestimmten Schwellwert für die Datenübertragungsrate zu begrenzen.

14. Computerprogrammprodukt, welches die Durchführung eines Verfahrens nach Anspruch 13 auf einer oder mehrerer programmgesteuerter Einrichtungen veranlasst.

## Claims

1. Communication network (100) having a multiplicity of network devices (201-210), having:
a plurality N of virtual networks (301-304) that are implemented in the communication network (100) such that each of the network devices (201-210) is coupled to the communication network (100) via at least two virtual networks (301-304), wherein the virtual networks (301-304) are implemented in the communication network (100) via disjunct paths, and
a plurality of network segments (401-409), wherein each of the network segments (401-409) has an associated subset of the network devices (201-210), wherein, the subsets are disjunct subsets, wherein each network device (201-210) which is arranged at a marginal region of the network segments (401-409) has N limiting units (510-515, 520-525, 530-534 , 540-544), wherein the respective instance of the N limiting units (510-515, 520-525, 530-534, 540-544) is associated with a respective instance of the N virtual networks (301-304) and is set up to limit data reception of data associated with the respective virtual network (301-304) to a threshold value for the data transmission rate, which threshold value is predetermined for the respective virtual network (301-304).

2. Communication network according to Claim 1, wherein the disjunct paths are physical disjunct paths.

3. Communication network according to Claim 1 or 2,
wherein
at least one network device (201-210) comprises a control device (213) and a switch device (214), coupled to the control device (213), that has at least one reception port (215) and one transmission port (216) for sending and receiving data via the communication network (100) at a maximum data transmission rate, wherein the N limiting units (510-515, 520-524, 530-534, 540-544) are associated with the reception ports (215) and are each set up to limit the data reception of data associated with the respective virtual network (301-304) at the respective associated reception port (215) to the threshold value for the data transmission rate that is specific to the respective virtual network.

4. Communication network according to one of Claims 1 to 3, wherein
exclusively the network devices (201-210) arranged at a marginal region of a network segment (401-409) are each equipped with the N limiting units (510-515, 520-525, 530-534, 540-544) .

5. Communication network according to one of Claims 1 to 4, wherein
the network devices (201-210) comprise at least two network devices (201-210) that are redundant with regard to their functionality, wherein the subsets are in a form such that each of the subsets has at most one of the redundant network devices (201-210) associated with it.

6. Communication network according to one of Claims 1 to 5, wherein
the virtual networks (301-304) are implemented in the communication network (100) so as to prevent overshooting of the threshold value for the data transmission rate at a limiting unit (510-515, 520-525, 530-534, 540-544) of a network segment (401-409) on account of reception of data from another network segment (401-409), wherein the virtual networks (301-304) are configured such that data packets are not routed through the network segment (401-409).

7. Communication network according to one of Claims 1 to 6, wherein
in that the virtual networks (301-304) are implemented in the communication network (100) such that each of the network devices (201-210) is coupled to the communication network (100) via at least two virtual networks (301-304) and none of the virtual networks (301-304) has a ring topology.

8. Communication network according to one of Claims 1 to 7, wherein
the virtual networks (301-304) are implemented in the communication network (100) such that a maximum link transmission rate is determined for each communication path between a transmission port (216) and a reception port (215), wherein the sum of the N threshold values of the N limiting units (510-515, 520-525, 530-534, 540-544) is less than or equal to the maximum link transmission rate of the associated reception port (215).

9. Communication network according to one of Claims 1 to 8, wherein
the data are associated with at least two priority classes, wherein the N limiting units (510-515, 520-525, 530-534, 540-544) are set up to record the priority classes and to limit the data reception on the basis of the priority classes.

10. Communication network according to one of Claims 1 to 9, wherein
the communication network (100) is an Ethernet network.

11. Communication network according to one of Claims 1 to 10, wherein
the network devices (201-210) are each embodied as an individual FPGA, ASIC, IC chip or hardwired microcircuit.

12. Communication network according to one of Claims 1 to 11, wherein
the communication network (100) comprises the multiplicity of the network devices (201-210) and a number of coupling switch devices (211, 212), wherein the coupling switch devices (211, 212) are each coupled to the communication network (100) exclusively via a single virtual network (301-304).

13. Method for operating a communication network (100) having a multiplicity of network devices (201-210), having the steps of:
implementation (S1) of a plurality N of virtual networks (301-304) in the communication network (100) such that each of the network devices (201-210) is coupled to the communication network (100) via at least two virtual networks (301-304), and the virtual networks (301-304) are implemented in the communication network (100) via disjunct paths, and
arrangement (S2) of the network devices (201-210) in a plurality of network segments (401-409), wherein each of the network segments (401-409) is allocated a subset of the network devices (201-210), wherein, the 0subsets are disjunct subsets, wherein each network device (201-210) which is arranged at a marginal region of a network segment (401-409) is equipped with N limiting units (510-515, 520-525, 530-534, 540-544), wherein the respective instance of the N limiting units (510-515, 520-525, 530-534, 540-544) is allocated to a respective instance of the N virtual networks (301-304) and is set up to limit data reception of data associated with the respective virtual network (301-304) to a threshold value for the data transmission rate, which threshold value is predetermined for the respective virtual network (301-304).

14. Computer program product that prompts the performance of a method according to Claim 13 on one or more program controlled devices.

## Revendications

1. Réseau de communication (100) comportant une pluralité de dispositifs de réseau (201-210), avec :
- une pluralité N de réseaux virtuels (301-304) qui sont mis en oeuvre de manière telle dans le réseau de communication (100) que chacun des dispositifs de réseau (201-210) est couplé au réseau de communication (100) via au moins deux réseaux virtuels (301-304), les réseaux virtuels (301-304) étant mis en oeuvre dans le réseau de communication (100) via des chemins disjoints, et
- une pluralité de segments de réseau (401-409), à chacun des segments de réseau (401-409) étant associé un sous-ensemble des dispositifs de réseau (201-210), les sous-ensembles étant des sous-ensembles disjoints, chaque dispositif de réseau (201-210) agencé dans une zone périphérique des segments de réseau (401-409) comportant N unités de limitation (510-515, 520-525, 530-534, 540-544), chacune des N unités de limitation (510-515, 520-525, 530-534, 540-544) étant associée à l'un des N réseaux virtuels (301-304) et étant configurée pour limiter une réception de données du réseau virtuel respectif (301-304) à une valeur seuil du débit de transmissions de données prédéterminée pour le réseau virtuel respectif (301-304).

2. Réseau de communication selon la revendication 1, les chemins disjoints étant des chemins disjoints physiques.

3. Réseau de communication selon la revendication 1 ou 2, au moins un dispositif de réseau (201-210) comprenant un dispositif de commande (213) et un dispositif de commutation (214) couplé au dispositif de commande (213), et qui comporte au moins respectivement un port récepteur (215) et un port émetteur (216) pour émettre et recevoir des données sur le réseau de communication (100) avec un débit de transmission de données maximal, les N unités de limitation (510-515, 520-524, 530-534, 540-544) étant associées aux ports récepteurs (215) et étant configurées respectivement pour limiter la réception de données du réseau virtuel respectif (301-304) au niveau du port récepteur respectif associé (215) à la valeur seuil du débit de transmission de données spécifique au réseau virtuel respectif.

4. Réseau de communication selon l'une des revendications 1 à 3, seuls les dispositifs de réseau (201-210) agencés dans une zone périphérique d'un segment de réseau (401-409) étant respectivement équipés des N unités de limitation (510-515, 520-525, 530-534, 540-544).

5. Réseau de communication selon l'une des revendications 1 à 4, les dispositifs de réseau (201-210) comprenant au moins deux dispositifs de réseau (201-210) redondants en termes de fonctionnalité, les sous-ensembles étant formés de telle sorte qu'à chacun des sous-ensembles est associé au maximum l'un des dispositifs de réseau redondants (201-210).

6. Réseau de communication selon l'une des revendications 1 à 5, les réseaux virtuels (301-304) étant mis en oeuvre dans le réseau de communication (100) de manière à éviter un dépassement de la valeur seuil du débit de transmission de données au niveau d'une unité de limitation (510-515, 520-525, 530-534, 540-544) d'un segment de réseau (401-409) en raison d'une réception de données d'un autre segment de réseau (401-409), les réseaux virtuels (301-304) étant configurés de telle sorte que des paquets de données ne peuvent pas passer par le segment de réseau (401-409).

7. Réseau de communication selon l'une des revendications 1 à 6, les réseaux virtuels (301-304) étant mis en oeuvre dans le réseau de communication (100) de manière telle que chacun des dispositifs de réseau (201-210) est couplé au réseau de communication (100) via au moins deux réseaux virtuels (301-304) et qu'aucun des réseaux virtuels (301-304) ne présente de topologie en anneau.

8. Réseau de communication selon l'une des revendications 1 à 7, les réseaux virtuels (301-304) étant mis en oeuvre dans le réseau de communication (100) de manière telle qu'un débit de transmission de liens maximal est déterminé pour chaque chemin de communication entre un port émetteur (216) et un port récepteur (215), la somme des N valeurs seuils des N unités de limitation (510-515, 520-525, 530-534, 540-544) étant inférieure ou égale au débit de transmission de liens maximal du port récepteur associé (215).

9. Réseau de communication selon l'une des revendications 1 à 8, les données étant associées à au moins deux classes de priorité, les N unités de limitation (510-515, 520-525, 530-534, 540-544) étant configurées pour détecter les classes de priorité et limiter la réception de données en fonction des classes de priorité.

10. Réseau de communication selon l'une des revendications 1 à 9, le réseau de communication (100) étant un réseau Ethernet.

11. Réseau de communication selon l'une des revendications 1 à 10, les dispositifs de réseau (201-210) étant réalisés respectivement en tant que FPGA, ASIC, IC Chip ou microcircuit câblé distincts.

12. Réseau de communication selon l'une des revendications 1 à 11, le réseau de communication (100) comprenant la pluralité de dispositifs de réseau (201-210) et un nombre de dispositifs de commutation et de couplage (211, 212), les dispositifs de commutation et de couplage (211, 212) étant respectivement couplés au réseau de communication (100) uniquement via un seul réseau virtuel (301-304).

13. Procédé d'exploitation d'un réseau de communication (100) comportant une pluralité de dispositifs de réseau (201-210), présentant les étapes suivantes :
- mise en oeuvre (S1) d'une pluralité N de réseaux virtuels (301-304) dans le réseau de communication (100) de manière telle que chacun des dispositifs de réseau (201-210) est couplé au réseau de communication (100) via au moins deux réseaux virtuels (301-304) et que les réseaux virtuels (301-304) sont mis en oeuvre via des chemins disjoints dans le réseau de communication (100) et
- agencement (S2) des dispositifs de réseau (201-210) dans une pluralité de segments de réseau (401-409), à chacun des segments de réseau (401-409) étant associé un sous-ensemble des dispositifs de réseau (201-210), les sous-ensembles étant des sous-ensembles disjoints, chaque dispositif de réseau (201-210) agencé dans une zone périphérique d'un segment de réseau (401-409) étant équipé de N unités de limitation (510-515, 520-525, 530-534, 540-544), chacune des N unités de limitation (510-515, 520-525, 530-534, 540-544) étant associée à l'un des N réseaux virtuels (301-304) et étant configurée pour limiter une réception de données du réseau virtuel respectif (301-304) à une valeur seuil du débit de transmissions de données prédéterminée pour le réseau virtuel respectif (301-304) .

14. Produit de programme informatique qui fait exécuter un procédé selon la revendication 13 sur un ou plusieurs dispositifs commandés par programme.
